# EUROPEAN PATENT APPLICATION

(11) **EP 4 206 945 A1**
(43) Date of publication of application: **05.07.2023**
(21) Application number: 21891102.2
(22) Date of filing: 09.11.2021
(51) Int. Cl.: G06F 16/242

(54) **SEARCH CONTENT MATCHING METHOD AND APPARATUS, AND ELECTRONIC DEVICE AND STORAGE MEDIUM**

(30) Priority: 11.11.2020 CN 202011256645
(71) Applicant: Beijing Zitiao Network Technology Co., Ltd., Beijing 100190 (CN)
(72) Inventor: CHEN, Kojung, Beijing 100190 (CN); QIAN, Cheng, Beijing 100190 (CN); ZHENG, Xiang, Beijing 100190 (CN); WANG, Jingquan, Beijing 100190 (CN); XIONG, Mengyuan, Beijing 100190 (CN); ZHUANG, Huiling, Beijing 100190 (CN); YANG, Jingsheng, Beijing 100190 (CN)
(74) Representative: Dentons UK and Middle East LLP
(86) International application number: PCT/CN2021/129610
(87) International publication number: WO 2022/100582

(57) **Abstract**

Provided are a search content matching method and apparatus, an electronic device and a storage medium. The search content matching method includes steps described below. At least one target meeting record including target search content is determined according to the target search content. Abstract information corresponding to each target meeting record of the at least one target meeting record is displayed, and target content matching the target search content is distinctively displayed in the abstract information.

## Description

This application claims priority to Chinese Patent Application No. 202011256645.3 filed with the China National Intellectual Property Administration (CNIPA) on Nov. 11, 2020, the disclosure of which is incorporated herein by reference in its entirety.

### TECHNICAL FIELD

The present disclosure relates to the field of computer technologies, for example, a search content matching method and apparatus, an electronic device and a storage medium.

### BACKGROUND

When a user needs to search for a meeting record including search content, multiple meeting records in a meeting record list need to be triggered sequentially, and a meeting record content page corresponding to the triggered meeting records is jumped to, so that whether the search content exists is determined from the meeting record content page.

In the preceding manner, if the user has participated in a relatively large number of meetings, a technical problem exists of low efficiency in searching for a meeting record including the search content.

### SUMMARY

The present disclosure provides a search content matching method and apparatus, an electronic device and a storage medium, so as to improve the convenience and efficiency of searching for a target meeting record.

The present disclosure provides a search content matching method. The method includes steps described below.

At least one target meeting record including target search content is determined from meeting records in a meeting record list according to the target search content.

Abstract information corresponding to each target meeting record of the at least one target meeting record is displayed, and target content matching the target search content is distinctively displayed in the abstract information.

The present disclosure further provides a search content matching apparatus. The apparatus includes a target meeting record determination module and a target content display module.

The target meeting record determination module is configured to determine, according to target search content, at least one target meeting record including the target search content from meeting records in a meeting record list.

The target content display module is configured to display abstract information corresponding to each target meeting record of the at least one target meeting record, and distinctively display target content matching the target search content in the abstract information.

The present disclosure further provides an electronic device. The electronic device includes one or more processors and a storage apparatus configured to store one or more programs.

The one or more programs, when executed by the one or more processors, cause the one or more processors to implement the preceding search content matching method.

The present disclosure further provides a storage medium including computer-executable instructions which, when executed by a computer processor, are configured to execute the preceding search content matching method.

### BRIEF DESCRIPTION OF DRAWINGS

FIG. 1 is a flowchart of a search content matching method according to embodiment one of the present disclosure;
FIG. 2 is an interface view of a current page according to embodiment one of the present disclosure;
FIG. 3 is an interface view of a current page where abstract information is displayed after target meeting records are searched out according to target search content and the abstract information corresponding to the target meeting records is determined according to embodiment one of the present disclosure;
FIG. 4 is a flowchart of a search content matching method according to embodiment two of the present disclosure;
FIG. 5 is a structural diagram of a search content matching apparatus according to embodiment three of the present disclosure; and
FIG. 6 is a structural diagram of an electronic device according to embodiment four of the present disclosure.

### DETAILED DESCRIPTION

Embodiments of the present disclosure are described hereinafter with reference to the drawings. The drawings illustrate some embodiments of the present disclosure, but the present disclosure may be implemented in various manners and should not be limited to the embodiments set forth herein. These embodiments are provided for more thorough and complete understanding of the present disclosure. The drawings and the embodiments of the present disclosure are only for illustrative purposes.

The various steps recited in method embodiments of the present disclosure may be performed in a different order and/or in parallel. In addition, the method embodiments may include additional steps and/or omit performing the illustrated steps. The scope of the present disclosure is not limited in this respect.

As used herein, the term "include" and variations thereof are intended to be inclusive, that is, "including, but not limited to". The term "based on" is "at least partially based on". The term "one embodiment" means "at least one embodiment"; the term "another embodiment" means "at least another embodiment"; and the term "some embodiments" means "at least some embodiments". Definitions of other terms are given in the description hereinafter.

Concepts such as "first" and "second" in the present disclosure are merely intended to distinguish one from another apparatus, module or unit and are not intended to limit the order or interrelationship of the functions performed by the apparatus, module or unit.

References to modifications of "one" or "a plurality" mentioned in the present disclosure are intended to be illustrative and not limiting; those skilled in the art should understand that "one" or "a plurality" should be understood as "one or more" unless clearly expressed in the context.

### Embodiment one

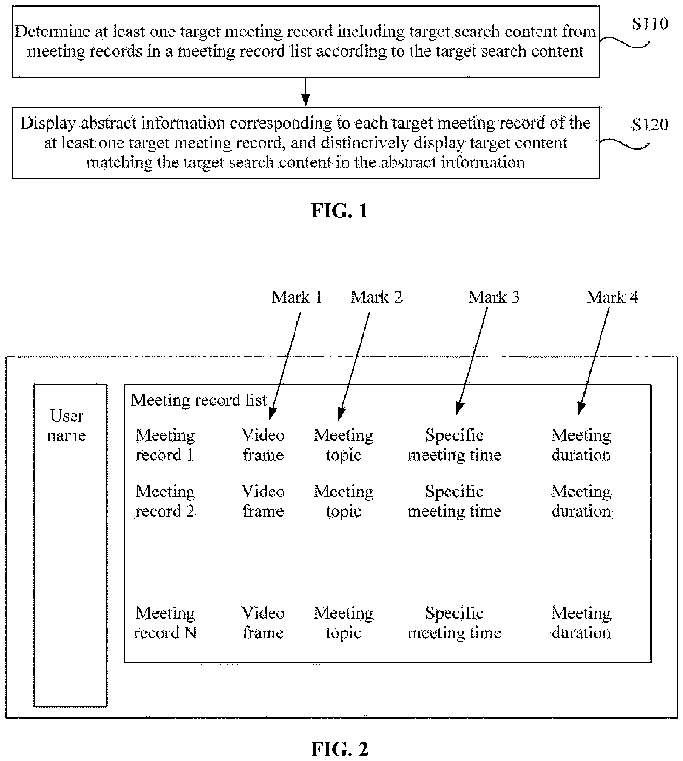

FIG. 1 is a flowchart of a search content matching method according to embodiment one of the present disclosure. The embodiment of the present disclosure is applicable to the case where a target meeting record including target search content is determined from meeting records that a user has currently participated in according to the target search content, and abstract information of the target meeting record is displayed on a current page. The method may be executed by a search content matching apparatus, which may be implemented in the form of software and/or hardware.

In some scenes, when users participate in a video meeting, a meeting participant or a meeting host may record the video meeting, and subtitle information of the video meeting is generated, during the recording of the video meeting, according to a speaking user identifier of a speaking user, speech information of the speaking user and a speaking timestamp. That is, after the speech information of the speaking user is converted into text information, the corresponding subtitle information is generated according to the speaking user identifier, the speaking timestamp and the text information. The subtitle information and the video obtained through screen recording of the video meeting are displayed on the same page, and the page is stored to a target position. Meanwhile, meeting records corresponding to the meeting may be generated and at least part of content of the meeting records is displayed in a meeting record list.

The above illustratively illustrates the manner for generating the meeting records and the meeting record list. The preceding manner for generating the meeting records and the meeting record list is merely illustrative. On the premise of not contradicting the embodiments disclosed herein, any feasible manner for generating the meeting records and the meeting record list may be adopted.

As shown in FIG. 1, the method in the embodiment includes steps described below.

In S110, at least one target meeting record including target search content is determined from meeting records in a meeting record list according to the target search content.

The target search content is search content edited by a target user in a search content editing control on a current page. A server may acquire the search content edited in the search content editing control, and use the acquired search content as the target search content. Optionally, the search content edited in the search content editing control is "search", and the target search content acquired by the server is "search". The meeting record list may record and display meeting records in which the target user has participated. After the target search content is input into the search content editing control, a meeting record including the target search content may be determined from the meeting records recorded in the meeting record list, and the meeting record including the target search content may be used as the target meeting record.

That is, the target meeting record is a meeting record including the target search content. The meeting record list may include multiple meeting records, and accordingly, one, two or more target meeting records may include the target search content; and the number of target meeting records is less than or equal to the number of meeting records in the meeting record list.

After acquiring the target search content, the server may search for, according to the target search content, the meeting record including the target search content from the meeting record list corresponding to the target user, and use the meeting record determined at this time as the target meeting record.

In the embodiment, before the at least one target meeting record including the target search content is determined according to the target search content, the method further includes steps described below. In a case where it is detected that a search starting control is triggered, target search content edited in a search content editing control is acquired; or in a case where it is detected that a search content editing control is triggered, target search content edited in the search content editing control is acquired.

Exemplarily, the target search content may be acquired in at least two manners described below. A page to which the meeting record list belongs may include the search content editing control and the search starting control. Optionally, the search starting control may be a control for "confirming" the search. A user may edit corresponding content in the search content editing control. After the content editing is completed, the user may trigger the search starting control, that is, click on the "confirming" control, and the server can acquire the search content edited in the search content editing control. Alternatively, it may be that in a case where it is detected that the user triggers the search content editing control, the server starts to acquire the search content edited in the search content editing control; if it is not detected within a preset time period, optionally, within 30 seconds, that the user edits new content, the acquired search content is used as the target search content.

In S120, abstract information corresponding to each target meeting record of the at least one target meeting record is displayed, and target content matching the target search content is distinctively displayed in the abstract information.

Each meeting record of the multiple meeting records displayed in the meeting record list has meeting record content corresponding to each meeting record. The meeting record content may be stored in a target storage space in the form of a page.

Since each meeting record in the meeting record list has meeting record content corresponding to each meeting record, the target meeting record also has meeting record content corresponding to the target meeting record. Corresponding abstract information may be determined according to the meeting record content. The abstract information includes the target content matching the target search content. The target content may be content matching the target search content. Optionally, the target content is content completely the same as the target search content; or the target search content may be converted, and content in the meeting record content which is the same as the target search content or is the same as the content obtained after the conversion of the target search content is used as the target content. For example, the target search content is "123", and the deformation corresponding to the target search content may be " 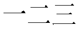 ", " 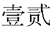 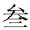 " and the like; and content the same as "123", " 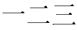 " or " 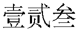 " in the meeting record content may be used as the target content.

In the embodiment, the conversion performed on the target content may be at least one of: singular and plural conversion, homophone conversion or case conversion.

The abstract information may be generated when the meeting record content is generated, or may be generated according to the meeting record content (for example, the target content matching the target search content and the context of the target content are presented as an abstract) when the abstract information corresponding to the target meeting record is displayed; the manner for generating the abstract information is not limited.

The target content itself is one or more elements in the abstract information. When displayed, the target content may be distinctively displayed from other elements, so as to the searched target content is highlighted, and thus the user can find the target content more visually and conveniently. Distinctively displaying may refer to displaying in different colors, different fonts, different background patterns, and other display formats for distinguishing.

After the target meeting record is determined, the abstract information of each target meeting record may be called, or corresponding abstract information may be determined according to the meeting record content corresponding to each target meeting record. When the abstract information is displayed, the target content in the abstract information may be distinctively displayed from other content, so as to achieve the technical effect of highlighting the target content.

According to the technical solution of the embodiment of the present disclosure, the target meeting record including the target search content may be searched for from the meeting record list according to the target search content, and the abstract information corresponding to the target meeting record is displayed, so that the convenience and efficiency of searching for the target meeting record including the target search content can be achieved.

Based on the preceding technical solution, the step in which at least one target meeting record including the target search content is determined from all meeting records in the meeting record list according to the target search content includes the step described below. The at least one target meeting record including the target search content is determined according to meeting record content corresponding to multiple to-be-selected meeting records in the meeting record list.

The target user may participate in multiple meetings, and accordingly, the meeting record list corresponding to the target user may record multiple meeting records. Generally, the number of meeting records that can be displayed in one page of the meeting record list is limited, and optionally, 10 meeting records may be displayed in one page of the meeting record list. If more than 10 meeting records exist actually, the meeting record list may include multiple pages, and the user may trigger a page turning button to go to the next page or the previous page. The target meeting record is also filtered out from all meeting records recorded in the meeting recording list.

Meeting records recorded in the meeting record list may be used as to-be-selected meeting records. The meeting record content refers to meeting record content generated according to a multimedia data stream. Optionally, the multimedia data stream may be a video obtained through screen recording, a data stream corresponding to scenes such as a multimedia audio meeting, an multimedia video meeting, live streaming, etc. For example, the multimedia data stream is a video obtained through screen recording, and the meeting record content may be corresponding content obtained after audio frames or video frames of the video obtained through screen recording are converted into corresponding subtitles.

After the target search content is acquired, whether the target search content is included may be determined from the meeting record content corresponding to the multiple to-be-selected meeting records. Meanwhile, the to-be-selected meeting record including the target search content is used as the target meeting record.

The meeting record list includes multiple to-be-selected meeting records, and each to-be-selected meeting record has association data corresponding to each to-be-selected meeting record. The association data may include a video frame in the multimedia data stream, that is, at least one of a video frame, a meeting topic or a meeting duration during the meeting, referring to FIG. 2.

In the embodiment, for the association data of the to-be-selected meeting records in the meeting record list, reference may be made to the schematic view shown in FIG. 2. For one meeting record of the multiple to-be-selected meeting records, a mark 1 may be a video frame in a meeting process, a mark 2 may be a meeting topic of a video meeting, a mark 3 may be a video meeting time, and a mark 4 may correspond to a meeting duration of the video meeting.

Exemplarily, the mark 1 may be a video frame in the meeting (such as the first frame of the meeting); the mark 2 corresponds to the meeting topic, and the meeting topic may be: discussing the advantages and disadvantages of tending topics; the mark 3 corresponds to the meeting time, such as 08: 00 to 10: 00 May 10, 2020; and the mark 4 corresponds to the meeting duration, such as 2 hours.

In the present embodiment, the preceding information is displayed in the meeting record list, so that the target user can quickly know the basic information of the meeting; therefore, when searching for the corresponding meeting record, the target user can perform a quickly search according to the basic information in the meeting record list, so that the user experience is improved.

In the embodiment, after the abstract information of the target meeting record is obtained, the abstract information may be displayed. The step in which the abstract information of each target meeting record is displayed including the step described below. Time information of generating each target meeting record is determined, and the abstract information of each target meeting record is displayed according to the time information of each target meeting record.

Generally, a user can only participate in one meeting in the same time period, and after the meeting is finished, the meeting can be recorded in a meeting record list, and time information recorded in the meeting record list is used as the time information of the meeting record.

Accordingly, a certain difference exists in time information corresponding to different meeting records in the meeting record list.

The time information of the target meeting record is the time information recorded in the meeting record list. According to the time information of each target meeting record, the abstract information of each target meeting record may be displayed in an chronological order.

In a practical application process, the step in which the abstract information of each target meeting record is displayed may also include the step described below. Abstract information corresponding to the at least one target meeting record is distinctively displayed on a meeting record list page, where the meeting record list page is a page including the meeting record list.

The page to which the meeting record list belongs may be used as the meeting record list page. Abstract information of the target meeting record may be displayed on the meeting record list page. Distinctively displaying the abstract information may be that the meeting record list page is divided into at least two areas, one area is used for displaying the meeting record list, and another area is used for displaying the abstract information. Alternatively, distinctively displaying the abstract information may also be displaying in different fonts for distinguishing; for example, to-be-selected meeting records in the meeting record list use the font of Song, and the abstract information uses the font of regular script. The manner for distinctively displaying is not limited, as long as the abstract information can be distinctively displayed on the meeting record list page.

In the present embodiment, the meeting record list page can display not only the meeting record list but also the abstract information of the target meeting record; in this manner, the user can browse the abstract information corresponding to the target meeting record on the same page, so that the convenience of use is improved.

In the embodiment, distinctively displaying the abstract information on the meeting record list page may be displaying the abstract information in different areas. Displaying in different areas may use at least two display manners described below, and reference may be made as follows.

The first display manner may include steps described below. The abstract information corresponding to the at least one target meeting record on the meeting record list page is distinctively displayed on the meeting record list page, where the at least one target meeting record on the meeting record list page is the at least one target meeting record filtered out from the multiple to-be-selected meeting records on the meeting record list page.

Each page of the meeting record list may include a preset number of to-be-selected meeting records, and the user updates the to-be-selected meeting records displayed on the meeting record list page by triggering a page turning control. For example, if the meeting record list includes 50 to-be-selected meeting records, each page may display 10 to-be-selected meeting records, and then the meeting record list includes 5 pages in total. The first page may include to-be-selected meeting records 1 to 10, ..., and the fifth page may include to-be-selected meeting records 41 to 50. The user may trigger the page turning control and determine the to-be-selected meeting records displayed on the meeting record list page.

Exemplarily, if the to-be-selected meeting records displayed in the meeting record list are to-be-selected meeting records 1 to 10, abstract information of a target meeting record of to-be-selected meeting records 1 to 10 may be distinctively displayed on the meeting record list page. For example, if the fifth meeting record is the target meeting record, abstract information corresponding to meeting record 5 may be displayed on the display interface. When the user triggers the page turning control, for example, when the fifth page is turned to, that is, when to-be-selected meeting records 41 to 50 are displayed in the meeting record list, at the same time, abstract information of a target meeting record of to-be-selected meeting records 41 to 50 may be displayed on the meeting record list page. Of course, if the to-be-selected meeting records displayed on one page do not include a target meeting record, abstract information may not be displayed when the page is turned to.

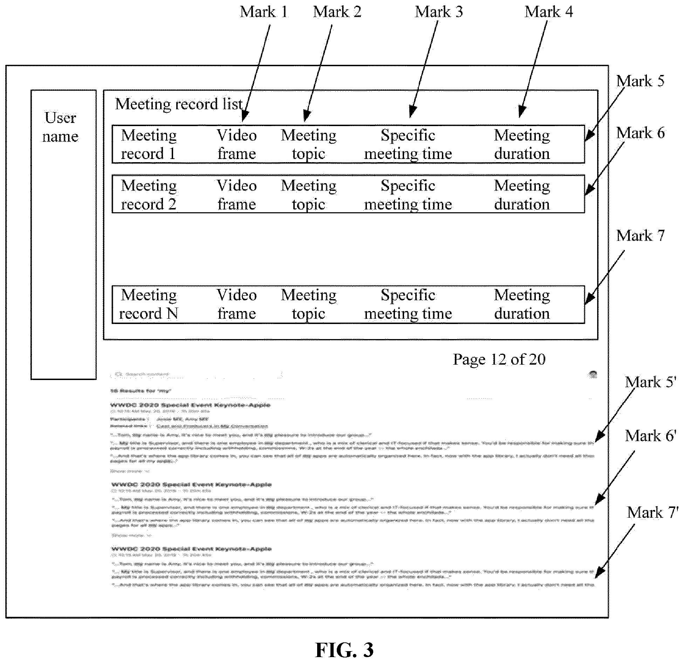

Exemplarily, referring to FIG. 3, 10 meeting records are displayed in the meeting record list, and 3 target meeting records include the target search content and correspond to a mark 5, a mark 6 and a mark 7, respectively. To-be-selected meeting records on the current page and abstract information corresponding to the target meeting record on the current page may be correspondingly displayed on the current page. Optionally, the abstract information corresponding to the mark 5 may be seen from a mark 5' which corresponds to the mark 5, the abstract information corresponding to the mark 6 may be seen from a mark 6' which corresponds to the mark 6, and the abstract information corresponding to the mark 7 may be seen from a mark 7' which corresponds to the mark 7.

That is, when the user triggers the page turning control, the to-be-selected meeting records in the meeting record list and the abstract information of the target meeting record are synchronously linked, that is, the abstract information of the target meeting record included on each page of the meeting record list is synchronously displayed with the to-be-selected meeting records on the corresponding page.

The second display manner may include the step described below. The at least one target meeting record and the abstract information corresponding to the at least one target meeting record are distinctively displayed on the meeting record list page.

The abstract information of all target meeting records is distinctively displayed in the meeting record list.

Based on the preceding technical solution, the method further includes the step described below. Abstract information of the at least one target meeting record is presented on a search result page different from a meeting record list page.

After the target meeting record is determined, a page may be reloaded and the abstract information of all target meeting records is displayed on the re-reloaded page, that is, the search result page. Meanwhile, on the search result page, the target content is distinctively displayed in the abstract information. In this manner, when multiple target meeting records exist, the multiple target meeting records can be displayed on the same search result page as much as possible, so as to facilitate reading by the user.

### Embodiment two

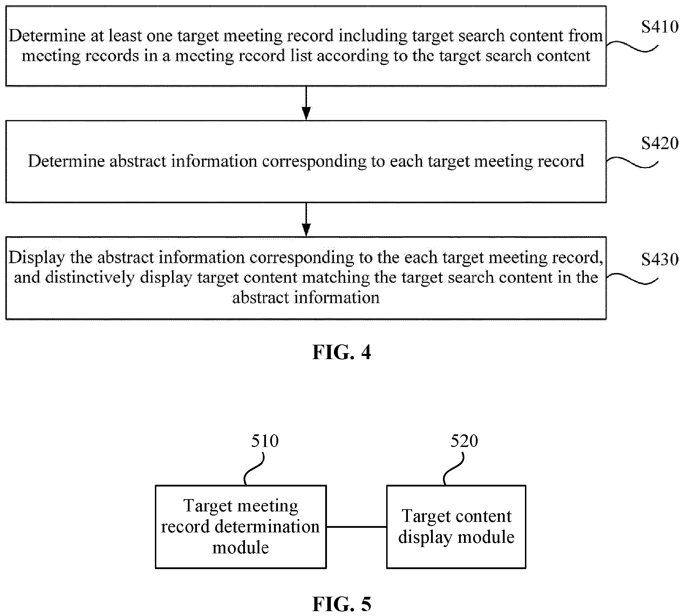

FIG. 4 is a flowchart of a search content matching method according to embodiment two of the present disclosure. Based on the preceding embodiment, when the user triggers target content in abstract information, a target page corresponding to the target content may be jumped to. Meanwhile, when the user rolls back from the target page to a meeting record list page, the target content on the page to which the abstract information belongs may also be distinctively displayed. Technical terms identical to or corresponding to the preceding embodiments are not repeated here.

As shown in FIG. 4, the method includes steps described below.

In S410, at least one target meeting record including target search content is determined from meeting records in a meeting record list according to the target search content.

In S420, abstract information corresponding to each target meeting record is determined.

In the embodiment, the step in which the abstract information of each target meeting record is determined may include the step described below. For each target meeting record, meeting record content corresponding to a current target meeting record is acquired, text information within a preset duration in the meeting record content and association information are acquired, and the abstract information is generated according to the text information and the association information, where the association information includes meeting identity information and in-meeting operation information.

In a practical application process, when a user participates in real-time interaction, corresponding subtitle information may be generated according to audio information of each participant, and at the same time, the subtitle information is part of the meeting record content. The text information within the preset duration may be extracted, and the extracted text information is used as part of the abstract information. The preset duration may be 5 minutes. Meanwhile, the meeting identity information, that is, identity information of participant users, during the meeting process may further be extracted. The in-meeting operation information may be operation information of document sharing or screen sharing, and a link of a document or a link in the shared screen may be displayed on the display interface during the document sharing or the screen sharing. The link information, the participant user information and part of subtitle information may be used as the abstract information of the target meeting record.

Text information within any 5 minutes may be acquired from the subtitle information, and the abstract information of the meeting record is generated according to the extracted text information, the link information and the participant information.

The abstract information may also be directly generated and stored at the time of generating the meeting record content, so that the abstract information of the corresponding meeting record may be called after the target meeting record is determined.

In S430, the abstract information corresponding to each target meeting record is displayed, and target content matching the target search content is distinctively displayed in the abstract information.

According to the technical solution of the embodiment of the present disclosure, the meeting record content corresponding to each target meeting record is acquired, the abstract information of the target meeting record may be extracted from the meeting record content, so that the abstract information is displayed on the current page, and thus the convenience and efficiency of a user determining the meeting content corresponding to the meeting record are improved.

Based on the preceding technical solution, the method further includes the step described below. The number of the at least one target meeting record including the target search content is acquired, and the number of the at least one target meeting record is displayed.

After the target search content is acquired, the number of target meeting records included in the meeting record list may be determined. Optionally, the meeting record list includes 100 to-be-selected meeting records, the number of target meeting records is 20, and the number of target meeting records may be displayed on a meeting record list page or a search result page. For example, if the abstract information and the meeting record list are on the same page, the number of target meeting records may be displayed on the meeting record list page; if the abstract information is displayed on the search result page different from the meeting record list page, the number of target meeting records may be displayed on the search result page. Whether the number of target meeting records is displayed on the meeting record list page or the number of target meeting records is displayed on the search result page, the number of target meeting records may be displayed at the edge of the page. In this manner, the user can quickly determine the number of target meeting records including the target search content.

In the embodiment, the abstract information includes the association information. The method further includes steps described below. In a case where it is detected that the association information is triggered, a link page corresponding to the link information or the participant user information is jumped to, and the target content is non-distinctively displayed on the link page.

The page which is jumped to after the user triggers the association information may be used as the link page. The association information may be participant identity information and in-meeting operation information. The participant identity information may be an identity identifier of a participant user, and the in-meeting operation information may be a document sharing operation, a screen sharing operation, etc. When a corresponding operation is triggered, corresponding information may be acquired. For example, when a document link sharing operation is triggered, a link of the shared document may be acquired; when a screen sharing operation is triggered, link information in the shared screen may be acquired.

The abstract information includes the link information and/or the participant information. When the user triggers the link information, the link page can be jumped to. Generally, the content on the link page may be meeting-related content or meeting-unrelated content, and therefore, the target content may be non-distinctively displayed on the link page.

That is, although the link page may include target content the same as the target search content, this target content is different from the target content in the target meeting record to a certain extent, so that the target content may be non-distinctively displayed on the link page.

Based on the preceding technical solution, the method further includes steps described below. In a case where it is detected that the abstract information is triggered, jumping is performed from a triggering page of the abstract information to a target page to which the abstract information belongs and including meeting record content; and the target content is distinctively presented on the target page.

Distinctively playing may refer to highlighting the target content for display. The page on which the meeting record content is recorded may be used as the target page on which subtitle information generated according to a multimedia data stream and a multimedia data stream may be displayed. The multimedia data stream is generated according to a video obtained through screen recording or a real-time interactive interface, and corresponding text information may be generated according to audio frames, that is, speech information, corresponding to each participant user in the multimedia data stream. The subtitle information corresponding to the multimedia data stream is generated according to a user identity identifier of the participant user, a speaking timestamp of the participant user and the text information corresponding to the speech information of the participant user. The subtitle information and the multimedia data stream may be placed on the same page, and the page at this time is the target page corresponding to the meeting record.

When the user triggers the target content distinctively displayed (highlighted) in the abstract information, the user can jump from the page to which the abstract information belongs, that is, the triggering page, to the target page, and the target page is a meeting record content page corresponding to the target meeting record to which the abstract information belongs. Meanwhile, the target content the same as the target search content is distinctively displayed on the target page. In this manner, the position of the target content on the target page can be quickly found, so as to facilitate searching for the corresponding target content.

In a practical application process, a case exists where the meeting record content includes the target content, but the abstract information does not include the target content. At this time, it may be that when it is detected that the abstract information is triggered, the target page to which the abstract information belongs may be jumped to, and the multimedia data stream and the subtitle information generated according to the multimedia data stream may be displayed on the target page. Of course, to improve the user experience, when the abstract information is triggered, the target content on the target page to which the abstract information belongs may be jumped to.

Based on the preceding technical solution, the step in which in a case where it is detected that the target content in the abstract information is triggered, jumping is performed from the triggering page of the abstract information to the target page to which the abstract information belongs and including the meeting record content includes steps described below. In a case where it is detected that the target content is triggered, a meeting record identifier to which the target content belongs is determined; and a target page corresponding to the meeting record identifier is jumped to.

The meeting record identifier may be understood as an identifier to which the target page storing the meeting record content belongs.

When it is detected that the user triggers the target content, the target meeting record corresponding to the target content may be determined, the meeting record identifier corresponding to the target meeting record is determined, the corresponding target page may be called from the page storing the meeting record according to the meeting record identifier, and jumping may be performed from the page corresponding to the abstract information to which the target content belongs to the target page.

The meeting record content includes the subtitle information generated according to the multimedia data stream; therefore, when it is detected that the user triggers the target content in the abstract information, the target page of the meeting record content to which the abstract information belongs may be jumped to, and the target content is distinctively displayed in the subtitle information on the target page. Optionally, the target content is highlighted for display in the subtitle information on the target page.

Meanwhile, a timestamp of the triggered target content in the subtitle information may further be determined, and subtitle information corresponding to the timestamp is jumped to. Accordingly, the target page also includes a multimedia data stream; at this time, a multimedia data stream corresponding to the timestamp may also be determined, and the multimedia data stream corresponding to the timestamp is jumped to.

In a practical application process, when the user triggers an operation of a rollback from the target page to the page to which the abstract information belongs, the step described below may be included. In a case where a rollback from the target page to the triggering page of the abstract information is detected, the target content is distinctively displayed on the triggering page of the abstract information.

The user may trigger the operation of the rollback from the target page to the triggering page. When a server detects that the operation of the rollback from the target page to the triggering page is triggered, the rollback from the target page to the triggering page may be performed, and the target content is still distinctively displayed on the triggering page. In this manner, the user can still view the corresponding abstract information, so that the problem of re-searching resulting in waste of resources and time can be avoided.

### Embodiment three

FIG. 5 is a structural diagram of a search content matching apparatus according to embodiment three of the present disclosure. As shown in FIG. 5, the apparatus includes a target meeting record determination module 510 and a target content display module 520.

The target meeting record determination module 510 is configured to determine, according to target search content, at least one target meeting record including the target search content from meeting records in a meeting record list; and the target content display module 520 is configured to display abstract information corresponding to each target meeting record of the at least one target meeting record, and distinctively display target content matching the target search content in the abstract information.

According to the technical solution of the embodiment of the present disclosure, the target search content is processed, the target meeting record including the target search content may be searched for from the meeting record list, and the abstract information corresponding to the target meeting record is displayed on the current page, so that the user can determine the target meeting record according to the abstract information, and the efficiency and convenience of determining the target meeting record can be achieved.

Based on the preceding technical solution, the target meeting record determination module 510, before being configured to determine, according to the target search content, the at least one target meeting record including the target search content from the meeting records in the meeting record list, is further configured to, in a case where it is detected that a search starting control is triggered, acquire target search content edited in a search content editing control; or in a case where it is detected that a search content editing control is triggered, acquire target search content edited in the search content editing control.

Based on the preceding technical solution, the target meeting record determination module 510 is configured to determine the at least one target meeting record including the target search content according to meeting record content corresponding to multiple to-be-selected meeting records in the meeting record list.

Based on the preceding technical solution, the meeting record list includes association data corresponding to each to-be-selected meeting record of the multiple to-be-selected meeting records.

Based on the preceding technical solution, the association data includes at least one of a video frame in a meeting, a meeting topic, a meeting time or a meeting duration.

Based on the preceding technical solution, the apparatus further includes a number determination module. The number determination module is configured to acquire the number of the at least one target meeting record including the target search content, and display the number of the at least one target meeting record.

Based on the preceding technical solution, the abstract information includes association information, and the apparatus further includes a jumping module. The jumping module is configured to, in a case where it is detected that the association information is triggered, jump to a link page corresponding to the association information, and non-distinctively display the target content on the link page.

Based on the preceding technical solution, the association information includes at least one of: meeting identity information or in-meeting operation information.

Based on the preceding technical solution, the apparatus further includes a target page jumping module and a distinguishable display module.

The target page jumping module is configured to, in a case where it is detected that the target content in the abstract information is triggered, jump from a triggering page of the abstract information to a target page to which the abstract information belongs and including meeting record content; and the distinguishable display module is configured to distinctively display the target content on the target page.

Based on the preceding technical solution, the target page jumping module is configured to, in a case where it is detected that the target content is triggered, determine a meeting record identifier to which the target content belongs; and jump to a target page corresponding to the meeting record identifier.

Based on the preceding technical solution, the target page includes the meeting record content. The meeting record content includes a multimedia data stream and subtitle information generated according to the multimedia data stream.

Based on the preceding technical solution, the distinguishable display module is configured to, in a case where a rollback from the target page to the triggering page of the abstract information is detected, distinctively display the target content on the triggering page of the abstract information.

Based on the preceding technical solution, the meeting record content includes subtitle information. The target content display module 520 of the apparatus is further configured to distinctively present the target content in the subtitle information.

Based on the preceding technical solution, the apparatus further includes a display module. The display module is configured to determine timestamp information of the triggered target content; and determine a playing moment in the multimedia data stream and corresponding to the timestamp information, and present an audio frame or a video frame which corresponds to the playing moment on the target page.

Based on the preceding technical solution, the target content display module 520 is further configured to determine time information of generating each target meeting record, and display the abstract information of each target meeting record according to the time information of each target meeting record.

Based on the preceding technical solution, the apparatus further involves the step described below. Abstract information corresponding to the at least one target meeting record is distinctively displayed on a meeting record list page, where the meeting record list page is a page including the meeting record list.

Based on the preceding technical solution, the apparatus further includes a result presenting module. The result presenting module is configured to present abstract information of the at least one target meeting record on a search result page different from a meeting record list page.

Based on the preceding technical solution, the target content display module 520 is further configured to determine the at least one target meeting record on the meeting record list page; and distinctively display the abstract information corresponding to the at least one target meeting record on the meeting record list page on the meeting record list page, where the at least one target meeting record on the meeting record list page is the at least one target meeting record filtered out from the multiple to-be-selected meeting records on the meeting record list page.

Based on the preceding technical solution, the target content display module 520 is further configured to distinctively display the at least one target meeting record and the abstract information corresponding to the at least one target meeting record on the meeting record list page.

Based on the preceding technical solution, the apparatus further includes an abstract information determination module. The abstract information determination module is configured to determine the abstract information of each target meeting record in the manner described below.

For each target meeting record, meeting record content corresponding to a current target meeting record is acquired, text information within a preset duration in the meeting record content and association information are acquired, and the abstract information is generated according to the text information and the association information, where the association information includes at least one of link information or participant user information in the meeting record content.

The search content matching apparatus provided in the embodiment of the present disclosure may execute the search content matching method provided in any embodiment of the present disclosure and has function modules for and effects of executing the method.

Units and modules included in the preceding apparatus are divided according to function logic.

These units and modules may also be divided in other manners as long as the corresponding functions can be implemented. Moreover, names of these function units are used for distinguishing between these function units and not intended to limit the scope of the embodiments of the present disclosure.

### Embodiment four

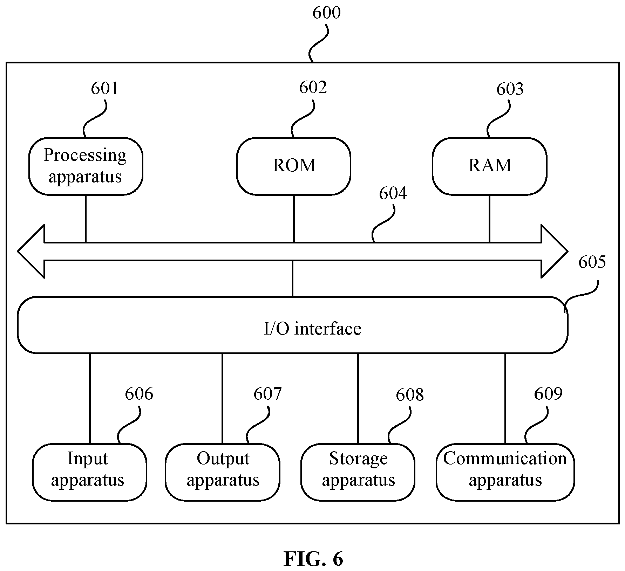

Referring to FIG. 6, FIG. 6 shows a structural diagram of an electronic device 600 (such as a terminal device or a server in FIG. 6) suitable for implementing the embodiments of the present disclosure. The terminal device in the embodiment of the present disclosure may include, but is not limited to, a mobile terminal such as a mobile phone, a laptop, a digital broadcast receiver, a personal digital assistant (PDA), a portable Android device (PAD), a portable media player (PMP) and an in-vehicle terminal (such as an in-vehicle navigation terminal) and a stationary terminal such as a digital television (TV) and a desktop computer. The electronic device shown in FIG. 6 is merely an example and is not intended to limit the function and usage scope of the embodiments of the present disclosure.

As shown in FIG. 6, the electronic device 600 may include a processing apparatus 601 (such as a central processing unit and a graphics processing unit). The processing apparatus 601 may execute multiple appropriate actions and processing according to a program stored in a read-only memory (ROM) 602 or a program loaded into a random-access memory (RAM) 603 from a storage apparatus 608. Various programs and data required for the operation of the electronic device 600 are also stored in the RAM 603. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 such as a touch screen, a touch pad, a keyboard, a mouse, a camera, a microphone, an accelerometer and a gyroscope; an output apparatus 607 such as a liquid crystal display (LCD), a speaker and a vibrator; the storage apparatus 608 such as a magnetic tape and a hard disk; and a communication apparatus 609. The communication apparatus 609 may allow the electronic device 600 to perform wireless or wired communication with other devices to exchange data. FIG. 19 shows the electronic device 600 having various apparatuses, but not all the apparatuses shown herein need to be implemented or present. Alternatively, more or fewer apparatuses may be implemented or present.

According to the embodiments of the present disclosure, the process described above with reference to a flowchart may be implemented as a computer software program. For example, a computer program product is included in the embodiments of the present disclosure. The computer program product includes a computer program carried in a non-transitory computer-readable medium. The computer program includes program codes for executing the method shown in the flowchart. In such an embodiment, the computer program may be downloaded from a network and installed through the communication apparatus 609, or may be installed from the storage apparatus 608, or may be installed from the ROM 602. When the computer program is executed by the processing apparatus 601, the preceding functions defined in the method of the embodiments of the present disclosure are executed.

The electronic device provided in the embodiment of the present disclosure belongs to the same concept as the search content matching method provided in the preceding embodiments. For the technical details not described in detail in this embodiment, reference may be made to the preceding embodiments, and this embodiment has the same effects as the preceding embodiments.

### Embodiment five

An embodiment of the present disclosure provides a computer storage medium storing a computer program which, when executed by a processor, implements the search content matching method provided in the preceding embodiments.

The computer-readable medium described above in the present disclosure may be a computer-readable signal medium or a computer-readable storage medium or any combination thereof. The computer-readable storage medium may be, but is not limited to, for example, an electronic, magnetic, optical, electromagnetic, infrared or semiconductor system, apparatus or device, or any combination thereof. An example of the computer-readable storage medium may include, but is not limited to, an electrical connection having one or more wires, a portable computer magnetic disk, a hard disk, a RAM, a ROM, an erasable programmable read-only memory (EPROM), a flash memory, an optical fiber, a portable compact disc read-only memory (CD-ROM), an optical storage device, a magnetic storage device or any suitable combination thereof. In the present disclosure, the computer-readable storage medium may be any tangible medium including or storing a program. The program may be used by or used in conjunction with an instruction execution system, apparatus or device. In the present disclosure, the computer-readable signal medium may include a data signal propagated on a baseband or as a part of a carrier, and computer-readable program codes are carried in the data signal. The data signal propagated in this manner may be in multiple forms and includes, but is not limited to, an electromagnetic signal, an optical signal or any suitable combination thereof. The computer-readable signal medium may further be any computer-readable medium other than the computer-readable storage medium. The computer-readable signal medium may send, propagate or transmit a program used by or used in conjunction with an instruction execution system, apparatus or device. The program codes included in the computer-readable medium may be transmitted in any suitable medium, including, but not limited to, a wire, an optical cable, a radio frequency (RF) or any suitable combination thereof.

In some embodiments, clients and servers may communicate using any network protocol currently known or to be developed in the future, such as HyperText Transfer Protocol (HTTP), and may be interconnected with any form or medium of digital data communication (such as a communication network). Examples of the communication network include a local area network (LAN), a wide area network (WAN), an internet (such as the Internet) and a peer-to-peer network (such as an Ad-Hoc network), as well as any network currently known or to be developed in the future.

The computer-readable medium may be included in the electronic device or may exist alone without being assembled into the electronic device.

The computer-readable medium carries one or more programs which, when executed by the electronic device, cause the electronic device to execute steps described below.

At least one target meeting record including target search content is determined from meeting records in a meeting record list according to target search content; and abstract information corresponding to each target meeting record of the at least one target meeting record is displayed, and target content matching the target search content is distinctively displayed in the abstract information.

Computer program codes for performing the operations in the present disclosure may be written in one or more programming languages or combination thereof. The preceding one or more programming languages include, but are not limited to, object-oriented programming languages such as Java, Smalltalk and C++, as well as conventional procedural programming languages such as C or similar programming languages. Program codes may be executed entirely on a user computer, executed partly on a user computer, executed as a stand-alone software package, executed partly on a user computer and partly on a remote computer, or executed entirely on a remote computer or a server. In the case involving the remote computer, the remote computer may be connected to the user computer through any type of network including a LAN or a WAN, or may be connected to an external computer (for example, via the Internet through an Internet service provider).

The flowcharts and block diagrams in the drawings show possible architectures, functions and operations of the system, method and computer program product according to multiple embodiments of the present disclosure. In this regard, each block in the flowcharts or block diagrams may represent a module, a program segment, or part of codes that contains one or more executable instructions for implementing specified logical functions. It is also to be noted that in some alternative implementations, the functions marked in the blocks may occur in an order different from those marked in the drawings. For example, two successive blocks may, in fact, be executed substantially in parallel or in reverse order, which depends on the functions involved. It is also to be noted that each block in the block diagrams and/or flowcharts and a combination of blocks in the block diagrams and/or flowcharts may be implemented by a special-purpose hardware-based system which performs specified functions or operations or a combination of special-purpose hardware and computer instructions.

The units involved in the embodiments of the present disclosure may be implemented by software or hardware. The name of a unit/module is not intended to limit the unit in a certain circumstance. For example, a target content display module may also be described as "a display module".

The functions described above herein may be executed, at least partially, by one or more hardware logic components. For example, without limitation, example types of hardware logic components that may be used include a field programmable gate array (FPGA), an application specific integrated circuit (ASIC), an application specific standard product (ASSP), a system on a chip (SoC) and a complex programmable logic device (CPLD).

In the context of the present disclosure, a machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof.

Examples of the machine-readable storage medium may include an electrical connection based on one or more wires, a portable computer disk, a hard disk, a RAM, a ROM, an EPROM, a flash memory, an optical fiber, a CD-ROM, an optical storage device, a magnetic storage device or any suitable combination thereof.

According to one or more embodiments of the present disclosure, example one provides a search content matching method. The method includes steps described below.

At least one target meeting record including target search content is determined from meeting records in a meeting record list according to target search content; and abstract information corresponding to each target meeting record of the at least one target meeting record is displayed, and target content matching the target search content is distinctively displayed in the abstract information.

According to one or more embodiments of the present disclosure, example two provides a search content matching method. Before the at least one target meeting record including the target search content is determined from the meeting records in the meeting record list according to target search content, the method further includes steps described below.

In a case where it is detected that a search starting control is triggered, target search content edited in a search content editing control is acquired; or in a case where it is detected that a search content editing control is triggered, target search content edited in the search content editing control is acquired.

According to one or more embodiments of the present disclosure, example three provides a search content matching method. According to the method, the step in which the at least one target meeting record including the target search content is determined from the meeting records in the meeting record list according to target search content includes the step described below.

The at least one target meeting record including the target search content is determined according to meeting record content corresponding to multiple to-be-selected meeting records in the meeting record list.

According to one or more embodiments of the present disclosure, example four provides a search content matching method. According to the method, the meeting record list includes association data corresponding to each to-be-selected meeting record of the multiple to-be-selected meeting records.

According to one or more embodiments of the present disclosure, example five provides a search content matching method. According to the method, the association data includes at least one of a video frame in a meeting, a meeting topic, a meeting time or a meeting duration.

According to one or more embodiments of the present disclosure, example six provides a search content matching method. The method further includes the step described below. The number of the at least one target meeting record including the target search content is acquired, and the number of the at least one target meeting record is displayed.

According to one or more embodiments of the present disclosure, example seven provides a search content matching method. The abstract information includes association information, and the method further includes the step described below.

In a case where it is detected that the association information is triggered, a link page corresponding to the association information is jumped to.

According to one or more embodiments of the present disclosure, example eight provides a search content matching method. After the link page corresponding to the association information is jumped to, the method further includes the step described below.

The target content is non-distinctively displayed on the link page.

According to one or more embodiments of the present disclosure, example nine provides a search content matching method. According to the method, the association information includes at least one of: meeting identity information or in-meeting operation information.

According to one or more embodiments of the present disclosure, example ten provides a search content matching method. The method further includes steps described below.

In a case where it is detected that the abstract information is triggered, jumping is performed from a triggering page of the abstract information to a target page to which the abstract information belongs and including meeting record content; and the target content is distinctively presented on the target page.

According to one or more embodiments of the present disclosure, example eleven provides a search content matching method. According to the method, the step in which in a case where it is detected that the target content in the abstract information is triggered, jumping is performed from the triggering page of the abstract information to the target page to which the abstract information belongs and including the meeting record content includes steps described below.

In a case where it is detected that the target content is triggered, a meeting record identifier to which the target content belongs is determined; and a target page corresponding to the meeting record identifier is jumped to.

According to one or more embodiments of the present disclosure, example twelve provides a search content matching method. According to the method, the target page includes the meeting record content.

According to one or more embodiments of the present disclosure, example thirteen provides a search content matching method. According to the method, the meeting record content includes subtitle information generated according to a meeting multimedia data stream, and the step in which the target content is distinctively presented on the target page includes the step described below.

The target content is distinctively presented in the subtitle information.

According to one or more embodiments of the present disclosure, example fourteen provides a search content matching method. According to the method, the meeting record content further includes a multimedia data stream, and the step in which the target content is distinctively presented on the target page includes steps described below.

Timestamp information of the triggered target content is determined; and a playing moment in the multimedia data stream and corresponding to the timestamp information is determined, and an audio frame or a video frame which corresponds to the playing moment is presented on the target page.

According to one or more embodiments of the present disclosure, example fifteen provides a search content matching method. The method further includes the step described below.

In a case where a rollback from the target page to the triggering page of the abstract information is detected, the target content is distinctively displayed on the triggering page of the abstract information.

According to one or more embodiments of the present disclosure, example sixteen provides a search content matching method. According to the method, the step in which the abstract information corresponding to each target meeting record is displayed includes the step described below.

Time information of generating each target meeting record is determined, and the abstract information of each target meeting record is displayed according to the time information of each target meeting record.

According to one or more embodiments of the present disclosure, example seventeen provides a search content matching method. The method further includes the step described below.

Abstract information corresponding to the at least one target meeting record is distinctively displayed on a meeting record list page, where the meeting record list page is a page including the meeting record list.

According to one or more embodiments of the present disclosure, example eighteen provides a search content matching method. The method further includes the step described below.

Abstract information of the at least one target meeting record is presented on a search result page different from a meeting record list page.

According to one or more embodiments of the present disclosure, example nineteen provides a search content matching method. According to the method, the step in which the abstract information corresponding to the at least one target meeting record is distinctively displayed on the meeting record list page includes the step described below.

The at least one target meeting record on the meeting record list page is determined; and the abstract information corresponding to the at least one target meeting record on the meeting record list page is distinctively displayed on the meeting record list page, where the at least one target meeting record on the meeting record list page is the at least one target meeting record filtered out from the multiple to-be-selected meeting records on the meeting record list page.

According to one or more embodiments of the present disclosure, example twenty provides a search content matching method. According to the method, the step in which the abstract information corresponding to the at least one target meeting record is distinctively displayed on the meeting record list page includes the step described below.

The at least one target meeting record and the abstract information corresponding to the at least one target meeting record are distinctively displayed on the meeting record list page.

According to one or more embodiments of the present disclosure, example twenty-one provides a search content matching method. Before the abstract information corresponding to each target meeting record is displayed, the method further in includes the step described below.

The abstract information corresponding to each target meeting record is determined.

The step in which the abstract information corresponding to each target meeting record is determined includes the step described below.

For each target meeting record, meeting record content corresponding to a current target meeting record is acquired, text information within a preset duration in the meeting record content and association information are acquired, and the abstract information is generated according to the text information and the association information, where the association information includes meeting identity information and in-meeting operation information.

According to one or more embodiments of the present disclosure, example twenty-two provides a search content matching apparatus. The apparatus includes a target meeting record determination module and a target content display module.

The target meeting record determination module is configured to determine, according to target search content, at least one target meeting record including the target search content from meeting records in a meeting record list; and the target content display module is configured to display abstract information corresponding to each target meeting record of the at least one target meeting record, and distinctively display target content matching the target search content in the abstract information.

In addition, although multiple operations are depicted in a particular order, this should not be construed as requiring that such operations should be performed in the shown particular order or in a sequential order. In certain circumstances, multitasking and parallel processing may be advantageous. Similarly, although implementation details are included in the preceding discussion, these should not be construed as limiting the scope of the present disclosure. Some features described in the context of separate embodiments may also be implemented in combination in a single embodiment. Conversely, various features described in the context of a single embodiment may also be implemented in multiple embodiments individually or in any suitable sub-combination.

## Claims

1. A search result matching method, comprising:
determining, according to target search content, at least one target meeting record comprising the target search content from meeting records in a meeting record list; and
displaying abstract information corresponding to each target meeting record of the at least one target meeting record, distinctively displaying target content matching the target search content in the abstract information.

2. The method according to claim 1, before determining, according to the target search content, the at least one target meeting record comprising the target search content from the meeting records in the meeting record list, further comprising:
in a case where it is detected that a search starting control is triggered, acquiring target search content edited in a search content editing control; or
in a case where it is detected that a search content editing control is triggered, acquiring target search content edited in the search content editing control.

3. The method according to claim 1, wherein determining, according to the target search content, the at least one target meeting record comprising the target search content from the meeting records in the meeting record list comprises:
determining the at least one target meeting record comprising the target search content according to meeting record content corresponding to a plurality of to-be-selected meeting records in the meeting record list.

4. The method according to claim 3, wherein the meeting record list comprises association data corresponding to each to-be-selected meeting record of the plurality of to-be-selected meeting records.

5. The method according to claim 4, wherein the association data comprises at least one of a video frame in a meeting, a meeting topic, a meeting time or a meeting duration.

6. The method according to claim 1, further comprising:
acquiring a number of the at least one target meeting record comprising the target search content, and displaying the number of the at least one target meeting record.

7. The method according to claim 1, wherein the abstract information comprises association information and the method further comprises:
in a case where it is detected that the association information is triggered, jumping to a link page corresponding to the association information.

8. The method according to claim 7, after jumping to the link page corresponding to the association information, further comprising:
non-distinctively displaying the target content on the link page.

9. The method according to claim 7, wherein the association information comprises at least one of: meeting identity information or in-meeting operation information.

10. The method according to claim 1, further comprising:
in a case where it is detected that the abstract information is triggered, jumping from a triggering page of the abstract information to a target page to which the abstract information belongs and comprising meeting record content; and
distinctively presenting the target content on the target page.

11. The method according to claim 10, wherein in the case where it is detected that the abstract information is triggered, jumping from the triggering page of the abstract information to the target page to which the abstract information belongs and comprising the meeting record content further comprises:
in a case where it is detected that the target content in the abstract information is triggered, determining a meeting record identifier to which the target content belongs; and
jumping to a target page which corresponds to the meeting record identifier and comprises the meeting record content.

12. The method according to claim 11, wherein the target page comprises the meeting record content.

13. The method according to claim 12, wherein the meeting record content comprises subtitle information generated according to a multimedia data stream, and wherein distinctively presenting the target content on the target page comprises:
distinctively presenting the target content in the subtitle information of the target page.

14. The method according to claim 13, wherein the meeting record content further comprises a multimedia data stream, and wherein distinctively presenting the target content on the target page comprises:
determining timestamp information of the triggered target content; and
determining a playing moment in the multimedia data stream and corresponding to the timestamp information, and presenting an audio frame or a video frame corresponding to the playing moment on the target page.

15. The method according to claim 10, further comprising:
in a case where a rollback from the target page to the triggering page of the abstract information is detected, distinctively displaying the target content on the triggering page of the abstract information.

16. The method according to claim 1, wherein displaying the abstract information corresponding to each target meeting record comprises:
determining time information of generating each target meeting record, and displaying the abstract information of each target meeting record according to the time information.

17. The method according to claim 3, further comprising:
distinctively displaying abstract information corresponding to the at least one target meeting record on a meeting record list page, wherein the meeting record list page is a page comprising the meeting record list.

18. The method according to claim 3, further comprising: presenting abstract information of the at least one target meeting record on a search result page different from a meeting record list page, wherein the meeting record list page is a page comprising the meeting record list.

19. The method according to claim 17, wherein distinctively displaying the abstract information corresponding to the at least one target meeting record on the meeting record list page comprises:
determining the at least one target meeting record on the meeting record list page; and
distinctively displaying the abstract information corresponding to the at least one target meeting record on the meeting record list page on the meeting record list page, wherein the at least one target meeting record on the meeting record list page is at least one target meeting record filtered out from the plurality of to-be-selected meeting records on the meeting record list page.

20. The method according to claim 17, wherein distinctively displaying the abstract information corresponding to the at least one target meeting record on the meeting record list page comprises:
distinctively displaying the at least one target meeting record and the abstract information corresponding to the at least one target meeting record on the meeting record list page.

21. The method according to any one of claims 1 to 20, before displaying the abstract information corresponding to each target meeting record, further comprising:
determining the abstract information corresponding to each target meeting record;
wherein determining the abstract information corresponding to each target meeting record comprises:
for each target meeting record, acquiring meeting record content corresponding to a current target meeting record, acquiring text information within a preset duration in the meeting record content and association information, and generating the abstract information according to the text information and the association information, wherein
the association information comprises meeting identity information and in-meeting operation information.

22. A search result matching apparatus, comprising:
a target meeting record determination module configured to determine, according to target search content, at least one target meeting record comprising the target search content from meeting records in a meeting record list; and
a target content display module configured to display abstract information corresponding to each target meeting record of the at least one target meeting record, and distinctively display target content matching the target search content in the abstract information.

23. An electronic device, comprising:
at least one processor; and
a storage apparatus configured to store at least one program;
wherein the at least one program, when executed by the at least one processor, causes the at least one processor to implement the search content matching method according to any one of claims 1 to 21.

24. A storage medium comprising computer-executable instructions which, when executed by a computer processor, cause the computer processor to execute the search content matching method according to any one of claims 1 to 21.
